# EUROPEAN PATENT APPLICATION

(11) **EP 4 729 756 A1**
(43) Date of publication of application: **22.04.2026**
(21) Application number: 25208332.4
(22) Date of filing: 13.10.2025
(51) Int. Cl.: F02C 6/20, F02C 7/36, F02C 9/48, F02K 5/00

(54) **SYSTEM AND METHOD FOR CONTROLLING COMPRESSOR PERFORMANCE IN AN AIRCRAFT PROPULSION SYSTEM**

(30) Priority: 11.10.2024 US 202418913904
(71) Applicant: PRATT & WHITNEY CANADA CORP., Longueuil, Québec J4G 1A1 (CA)
(72) Inventor: MARTEL, Eric, (01BE5) Longueuil, J4G 1A1 (CA); CASAVANT, Francois, (01BE5) Longueuil, J4G 1A1 (CA); GOSSELIN-BRISSON, Samuel, (01BE5) Longueuil, J4G 1A1 (CA)
(74) Representative: Dehns

(57) **Abstract**

An aircraft propulsion system (20) and a method of controlling a compressor (23) operating line in a propulsion system (20) for an aircraft is provided. The system (20) includes a gas turbine engine (22), an electric motor (34; 36; 41), a gearbox (28), and a propulsor (26). The gas turbine engine (22) has a compressor (23), a combustor (25), a turbine (27), and an engine shaft (29) extending between the compressor (23) and the turbine (27). The gas turbine engine (22) is in drive engagement with the gearbox (28), and the propulsor (26) is driven by the gearbox (28). The method includes: controlling the gas turbine engine (22) to provide motive force to the propulsor (26); determining an operational line of the compressor (23); and controlling the operational line of the compressor (23) by controlling the electric motor (34; 36; 41) to change an amount of load on the compressor (23) attributable to the electric motor (34; 36; 41).

## Description

### BACKGROUND OF THE INVENTION

### 1. Technical Field

The present disclosure relates to aircraft propulsion systems with gas turbine engines in general, and to control systems for aircraft propulsion systems with gas turbine engines in particular.

### 2. Background Information

Compressor stall is a limiting factor in the operation of gas turbine engines. In modem gas turbine engines, unstable flow may develop in the compressor during acceleration phases and/or under high altitude and lower speed flight conditions. Such unstable flow may lead to stall or surge. During transient engine operation (e.g., during engine acceleration or deceleration), the compressor operating line may shift significantly with respect to steady-state conditions. For example, the flow admitted by the turbine as a function of pressure may be significantly reduced as fuel flow is increased during an engine acceleration transient, thereby substantially changing the compressor operating line. The maximum acceleration capability of the gas turbine engine is often directly related to the compressor operating line. A need exists for a control system that controls stall margin of a gas turbine engine and one that improves the maximum acceleration capability of the gas turbine engine

### SUMMARY

According to an aspect of the present disclosure, a method of controlling a compressor operating line in a propulsion system for an aircraft is provided. The system includes a gas turbine engine, an electric motor, a gearbox, and a propulsor. The gas turbine engine has a compressor, a combustor, a turbine, and an engine shaft extending between the compressor and the turbine. The gas turbine engine is in drive engagement with the gearbox, and the propulsor is driven by the gearbox. The method includes: controlling the gas turbine engine to provide motive force to the propulsor; determining an operational line of the compressor; and controlling the operational line of the compressor by controlling the electric motor to change an amount of load on the compressor attributable to the electric motor.

In any of the above, the electric motor may be in drive engagement with the gearbox.

In any of the above, the method may include determining an existing amount of load on the compressor attributable to the electric motor prior to the step of controlling the operational line of the compressor.

In any of the above, the method may include determining whether the compressor is operating in a stable operation region based on the operational line.

In any of the above, the method may include determining a stall margin of the compressor based on a position of the operational line.

In any of the above, the position of the operational line may shift from a first operational line position to a second operational line as a result of the change in the amount of load on the compressor attributable to the electric motor.

In any of the above, performing the step of controlling the operational line of the compressor by controlling the electric motor to change the amount of load on the compressor may increase the stall margin.

In any of the above, the step of controlling the operational line of the compressor by controlling the electric motor to change the amount of load on the compressor may include adding an additional amount of load attributable to the electric motor to the amount of load on the compressor.

In any of the above, performing the step of controlling the operational line of the compressor by controlling the electric motor to change the amount of load on the compressor may include removing a portion of the amount of load attributable to the electric motor on the compressor.

In any of the above, the electric motor may be a starter motor for the gas turbine engine.

According to another aspect of the present disclosure, which the Applicant expressly reserves the right to claim independently, a method of controlling a compressor in a propulsion system for an aircraft is provided. The system includes a gas turbine engine, an electric motor, a gearbox, and a propulsor. The gas turbine engine has a compressor, a combustor, a turbine, and an engine shaft extending between the compressor and the turbine. The gas turbine engine is in drive engagement with the gearbox, and the propulsor is driven by the gearbox. The method includes: controlling the gas turbine engine to provide motive force to the propulsor; determining an operational line of the compressor; determining a maximum acceleration capability of the compressor based on the operational line of the compressor; and controlling the maximum acceleration capability of the compressor by controlling the electric motor to change an amount of load on the compressor attributable to the electric motor.

In any of the above, performing the step of controlling the maximum acceleration capability of the compressor by controlling the electric motor to change the amount of load on the compressor may increase the maximum acceleration capability.

In any of the above, the method may include reporting the maximum acceleration capability of the compressor to an operator of the aircraft.

In any of the above, the method may include using the maximum acceleration capability of the compressor to control an actual acceleration of the gas turbine engine.

According to an aspect of the present disclosure, a propulsion system for an aircraft is provided that includes a gas turbine engine, an electric motor, a gearbox, a propulsor, and a system controller. The gas turbine engine has a compressor, a combustor, a turbine, and an engine shaft extending between the compressor and the turbine. The gas turbine engine is in drive engagement with the gearbox and the propulsor is driven by the gearbox. The system controller is in communication with the gas turbine engine, the electric motor, and a non-transitory memory storing instructions. The instructions when executed cause the system controller to: control the gas turbine engine to provide motive force to the propulsor; determine an operational line of the compressor; and control the operational line of the compressor by controlling the electric motor to change an amount of load on the compressor attributable to the electric motor.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a present disclosure hybrid-electric propulsion system embodiment.
FIG. 2 is a diagrammatic gas turbine engine compressor performance map.
FIG. 3 is a diagrammatic gas turbine engine compressor performance map.
FIG. 4 is a flow chart illustrative of a present disclosure embodiment.
FIG. 5 is a flow chart illustrative of a present disclosure embodiment.

### DETAILED DESCRIPTION

Aspects of the present disclosure are directed to a system and method for controlling operation of a hybrid-electric propulsion system; i.e., a "HEP system". As detailed herein, however, the present disclosure is not limited to use with HEP systems. The HEP system may be configured to power an aircraft or other power applications. The aircraft may be a fixed-wing aircraft, a rotary-wing aircraft (e.g., a helicopter), a tilt-rotor aircraft, a tilt-wing aircraft, or any other aerial vehicle. The aircraft may be a manned aerial vehicle or an unmanned aerial vehicle (UAV, e.g., a drone).

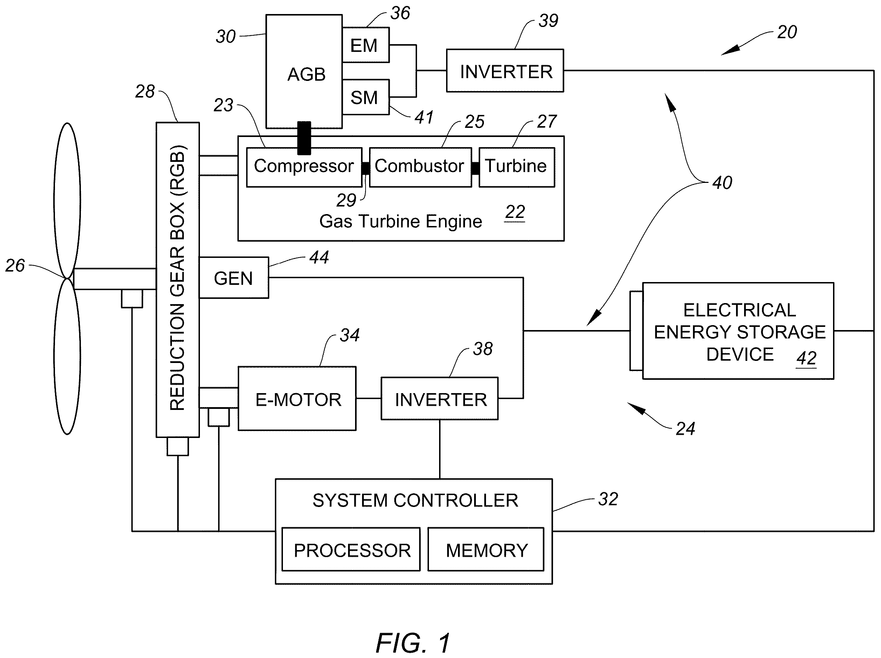

FIG. 1 illustrates a non-limiting example configuration of a HEP system 20 that may be configured according to the present disclosure to facilitate the description herein. The present disclosure is not limited to this HEP system 20 example. The HEP system 20 includes a gas turbine engine 22, an electrical power motive system 24, a reduction gearbox (RGB) 28, an accessory gearbox (AGB) 30, a system controller 32, and a propulsor 26.

The gas turbine engine 22 may take the form of a turboprop engine, a turboshaft engine, a turbojet engine, a propfan engine, a free power turbine engine, or an open rotor engine, or the like. The gas turbine engine 22 includes a compressor 23, combustor 25, and a turbine 27. The compressor 23, combustor 25, and turbine 27 are shown diagrammatically in FIG. 1. The present disclosure is not limited to any particular configurations of the compressor 23, combustor 25, and turbine 27 unless detailed herein.

The electrical power motive system 24 includes an electric motor 34 (referred to herein as "E-Motor 34"), an inverter 38, an electrical distribution bus 40, and an electrical energy storage device 42.

In some embodiments, the HEP system 20 may include a second electric motor 36 ("EM 36") and a second inverter 39 (e.g., as shown in FIG. 1) that is configured to provide electrical energy to the HEP system 20 and/or the aircraft. The second electric motor 36 may be engaged with the AGB 30 and the AGB 30 may be engaged (directly or indirectly) with a compressor rotational shaft 29 of the gas turbine engine 22.

In some embodiments, the HEP system 20 may include an electric starter motor 41 in electrical communication with the second inverter 39; e.g., as shown in FIG. 1. The electric starter motor 41 may be engaged with the AGB 30 and the AGB 30 may be engaged (directly or indirectly) with a compressor rotational shaft 29 of the gas turbine engine 22.

The E-Motor 34 is engaged with the RGB 28 and may be mounted on the RGB 28 directly as shown in FIG. 1. The E-Motor 34 is controllable to provide motive force to the propulsor 26 via the RGB 28. As will be detailed herein, the E-Motor 34 (through the RGB 28) may be configured to selectively impart (e.g., add, remove, or maintain existing) load on the compressor 23 of the gas turbine engine 22. If the compressor 23 is used to drive the E-Motor 34, the E-Motor 34 adds to the load on the compressor 23. Conversely, if the E-Motor 34 is adding drive to the compressor 23, the E-Motor 34 removes load from the compressor 23.

In those embodiments that include an electric starter motor 41, the electric starter motor 41 may be controlled to selectively impart (e.g., add, remove, or maintain existing) load on the compressor 23 of the gas turbine engine 22.

The first inverter 38 may be configured to control (e.g., regulate) the electrical energy (e.g., AC voltage and/or frequency) supplied to the E-Motor 34 from the electrical distribution bus 40. Similarly, the second inverter 39 may be configured to control (e.g., regulate) the electrical energy (e.g., AC voltage and/or frequency) supplied to the second electric motor 36 from the electrical distribution bus 40. In those embodiments that include an electric starter motor 41, the second inverter 39 may be configured to control (e.g., regulate) the electrical energy supplied to the electric starter motor 41 from the electrical distribution bus 40. The first and second inverters 38, 39 may be independent of one another, or in some embodiments they may be configured as a single inverter that is designed to control more than one electric motor. The inverters 38, 39 may be configured to measure or otherwise determine (e.g., via sensors, control logic, or the like) a rotation speed of and/or a torque produced by the respective electric motor. By controlling the electrical energy supplied to the respective electric motor, the inverter 38, 39 may control the electric motor to operate at a controlled rotation speed and/or torque. For example, the inverter 38, 39 may control the electric motor to apply a determined amount of positive torque. The inverter 38, 39 may include an electronic control system that includes a processor connected in signal communication with a non-transitory memory storing instructions, which instructions when executed by the processor, cause the inverter 38, 39 and/or its processor to control a rotation speed and/or torque of the electric motor. The inverter 38, 39 may be independent of and in signal communication with the system controller 32, or the inverter 38, 39 may be partially or fully integral with the system controller 32 (or other controller), or the system controller 32 may be partially or fully integral with the inverter 38, 39. The inverters 38, 39 are not limited to any particular configuration or electronic control architecture.

The electrical distribution bus 40 is configured to provide electrical communication between components of the electrical power motive system 24; e.g., the E-Motor 34, the first inverter 38, the electrical energy storage device 42, the second electric motor 36, the second inverter 39, and the electric starter motor 41 when included. In some embodiments, a single electrical distribution bus 40 may provide electrical communication between components of the electrical power motive system 24. In some embodiments, the electrical distribution bus 40 may include independent portions. The present disclosure is not limited to any particular electrical distribution bus 40 configuration.

The electrical energy storage device 42 may be any device that can be charged and discharged. A non-limiting example of an electrical energy storage device 42 that can be charged and discharged is a battery. A battery may be a single battery, or a plurality of battery modules (e.g., battery packs), battery cells, and/or the like electrically connected together in series and/or parallel as necessary to configure the battery with the desired electrical characteristics (e.g., voltage output, current output, storage capacity, etc.). The battery (e.g., and its battery cells) may be configured as a rechargeable battery having a battery chemistry such as, but not limited to, lead acid, nickel cadmium (NiCd), nickel-metal hydride (Ni-MH), lithium-ion (Li-ion), lithium-polymer (Li-poly), lithium metal, and the like. The present disclosure is not limited to any particular battery configuration. Another example of an electrical energy storage device 42 that can be charged and discharged is a supercapacitor.

The propulsor 26 may be any type of device (e.g., propellers, fan blades, rotor blades for a helicopter, a tilt-rotor aircraft, or a tilt-wing aircraft) that can be rotated to provide motive thrust.

The system controller 32 may include one or more processors connected in signal communication with a memory device. The processor may include any type of computing device, computational circuit, processor(s), CPU, computer, or the like capable of executing a series of instructions that are stored in the memory. Instructions can be directly executable or can be used to develop executable instructions. For example, instructions can be realized as executable or non-executable machine code or as instructions in a high-level language that can be compiled to produce executable or non-executable machine code. In addition, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the gas turbine engine 22 and/or the electrical power motive system 24 to accomplish the same algorithmically and/or by coordination of the gas turbine engine 22 and/or the electrical power motive system 24 components. The memory may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled with the system controller 32. The system controller 32 may include, or may be in communication with, an input device that enables a user to enter data and/or instructions, and may include, or be in communication with, an output device configured, for example to display information (e.g., a visual display), or to transfer data, etc. Communications between the system controller 32 and other electrical and/or electronic components (e.g., controllers, sensors, etc.) may be via a hardwire connection or via a wireless connection. A person of skill in the art will recognize that portions of the system controller 32 may assume various forms (e.g., digital signal processor, analog device, etc.) capable of performing the functions described herein.

The functions of the system controller 32 described herein may be performed by the system controller 32 itself, or may be performed in combination with or cooperatively with one or more other controllers (e.g., the inverter 38, 39, an engine controller, an electric motor controller, an avionics system such as a flight control computer, or any combination thereof). The system controller 32 may include or functionally be a part of an electronic engine controller (EEC) for the gas turbine engine 22. The EEC may control operating parameters of the gas turbine engine 22. In some embodiments, the EEC may be part of a full authority digital engine control (FADEC) system for the present disclosure HEP system 20. To facilitate the description herein and unless otherwise specifically noted, the functionality of the present disclosure is described herein as being performed by the system controller 32. The present disclosure is not, however, limited to being performed by a singular, independent system controller 32.

In the HEP system 20 embodiment shown in FIG. 1, the gas turbine engine 22, the E-Motor 34, and the RGB 28 are arranged in a parallel configuration. The parallel configuration is a non-limiting example of an acceptable present disclosure HEP system 20 configuration.

The terms "forward" and "aft" are used herein to indicate position along the axial centerline. For example, in a conventional gas turbine engine 22, the compressor 23, combustor 25, and the turbine 27 may be disposed sequentially along the axial centerline, with the compressor 23 disposed forward of the combustor 25 and the turbine 27 disposed aft of the combustor 25. The term "upstream" and "downstream" are used to indicate position within the gas path of the gas turbine engine 22; e.g., the turbine 27 is disposed downstream of the combustor 25 and the compressor 23 is disposed upstream of the combustor 25. The term "radial" refers to a direction that is perpendicular to the axial centerline of the engine 22 and may be used herein to indicate position relative to the axial centerline; e.g., a first component positioned "radially inward" of a second component is disposed closer to the axial centerline than the second component, and conversely the second component is disposed "radially outward" of the first component.

During operation of the gas turbine engine 22, ambient air enters the gas turbine engine 22 through an air inlet and is directed into the compressor 23. The ambient air is compressed within the compressor 23 and is directed into the combustor 25. Fuel is injected into the combustor 25 and is mixed with the compressed air to provide a fuel-air mixture. This fuel-air mixture is ignited, and combustion products thereof flow through and sequentially cause the turbine rotors to rotate. The rotation of the turbine 27 drives rotation of the compressor 23.

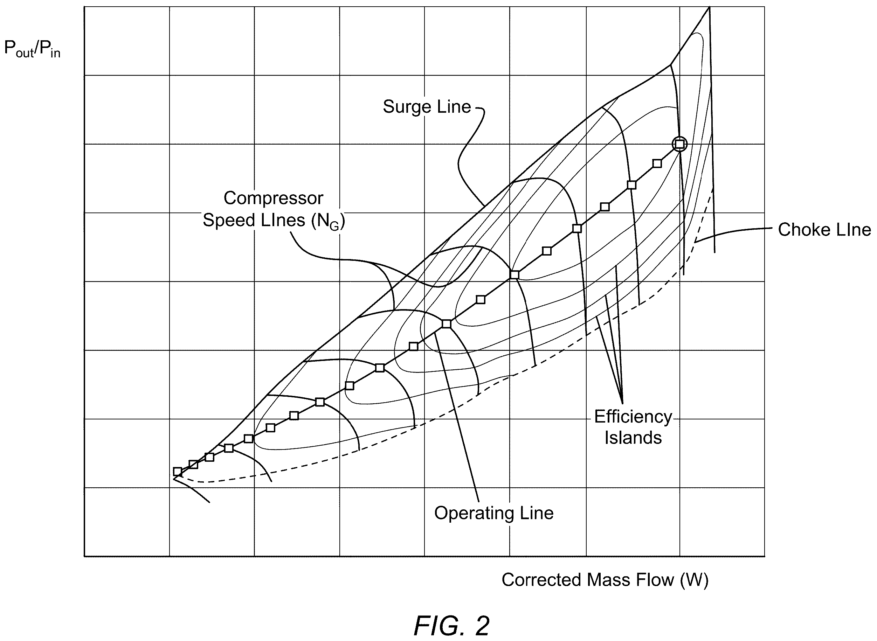

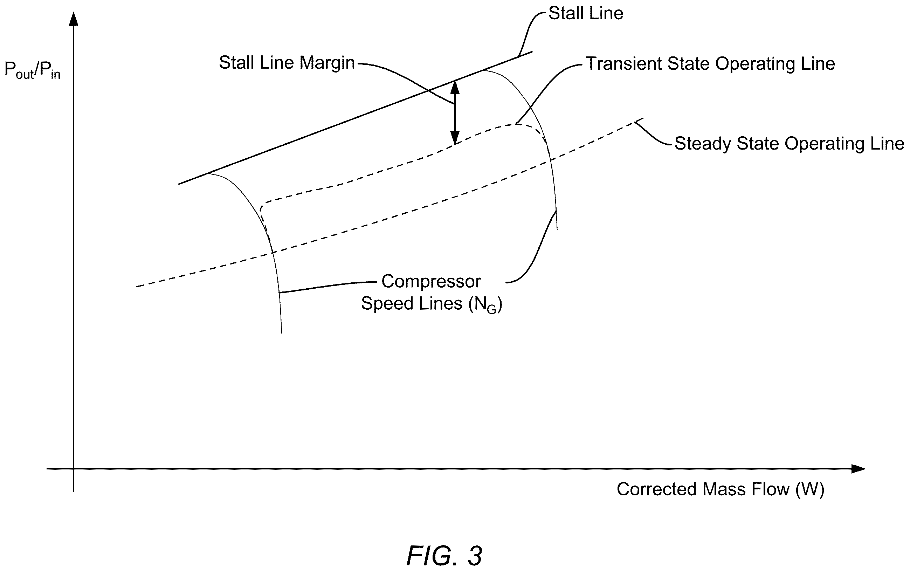

FIGS. 2 and 3 are diagrammatic compressor performance maps reflecting the performance of a compressor 23 as a function of the pressure ratio across the compressor 23 (Pₒᵤₜ / Pᵢₙ) versus corrected mass flow through the compressor 23. The compressor 23 operates under a set of conditions that can be represented by operating points on the compressor performance map. Each operating point is function of the rotational speed (N_{G}) of the compressor 23, the pressure ratio (P_{OUT} / P_{IN}) across the compressor 23 and the corrected mass flow rate (W) through the compressor 23. The operating points may be connected to one another to form a line referred to as an operating line (sometimes referred to as a "run line", or "running line", or "working line", or the like). FIGS. 2 and 3 both illustrate a steady state operating line and compressor rotational speed lines. The steady state operating line is representative of operating points when the engine 22 is operating in a steady state. FIG. 2 illustrates a surge line and a choke line and FIG. 3 illustrates a stall line. The term "stall" refers to a disturbance of compressor flow in a tangential direction and the term "surge" refers to a disturbance of compressor flow in an axial direction. Compressor stall is understood to be the underlying cause behind compressor surge. The region between the stall line and the choke line is a region of compressor operation stability. The regions outside of the stall line / choke line (e.g., above the stall line and below the choke line) are regions of compressor operation instability.

FIG. 3 also illustrates a transient operating line that deviates from the steady state operating line. The transient operating line may reflect a transient operating condition such as a period of acceleration or deceleration. During transient engine 22 operation (e.g., during a conventional engine acceleration or deceleration), the compressor operating line may shift significantly with respect to steady-state conditions. For example, the mass flow admitted by the turbine 27 as a function of pressure may be significantly reduced as fuel flow is increased during an engine acceleration transient, thereby substantially changing the compressor operating line. Compressors are typically assigned a stability or safety margin (e.g., a "stall margin") within which the compressor should operate. The compressor 23 is controlled to maintain the operational line within the stable operation region. In the event the operating line extends outside of the stall / surge line, the operation of the compressor 23 may become unstable. Hence, the control system of the engine 22 may be configured to determine a "stall margin" calculation indicative of the normalized gap or margin between the current operating point on the compressor performance map and the stall line. The engine control system may be configured to monitor engine conditions and control the gas turbine engine 22 based on stall margin remaining estimation.

Conventional gas turbine engines are often limited in the compressor control options due in part to the inertia of the gas turbine engine; e.g., the gas turbine engine typically experiences some degree of response lag when control is predicated on fuel control. Conventional gas turbine engine systems may utilize various control systems (e.g., variable inlet guide vanes, inter compressor bleed, and the like) to control compressor operation and thereby avoid stall conditions. Embodiments of the present disclosure are directed to, but not limited to, HEP systems 20 and provide a novel and unobvious methodology to control compressor 23 performance, including a substantial improvement in stall avoidance and maximum acceleration capability. As detailed herein, some embodiments of the present disclosure may be directed to conventional gas turbine engine applications, where they can also be used to provide a novel and unobvious methodology to control compressor 23 performance.

An electric motor (e.g., the "second electric motor 36" or "EM 36" shown in FIG. 1) driven off of the compressor of a conventional gas turbine engine imparts a load to the compressor. Conventional compressor control systems recognize this load and it is reflected in the operating line of the compressor. Moreover, to ensure stall/surge is avoided (i.e., a conservative position), conventional surge margin analysis may assume a maximum anticipated electrical load. Hence, conventional compressor control systems may be hampered in controlling the operation of the compressor (e.g., to maintain an operational line that avoids stall conditions) by the need to provide electrical energy via the electric motor of the conventional configuration and the desire to be conservative in the compressor surge margin analysis.

Embodiments of the present disclosure, provide a HEP system 20 control system and methodology that leverages the fact that the E-Motor 34 is used in the HEP system 20 to provide motive force to the propulsor 26 via the RGB 28 and the fact that electric motor load on the compressor 23 influences the operational line of the compressor 23. These embodiments of the present disclosure may be configured to determine: a) the magnitude of the E-Motor 34 load applied to the compressor 23; b) the location of the compressor operational line within the compressor performance map and therefore the location of the compressor operational line relative to the stall line within the compressor performance map, and c) a desired amount of E-Motor 34 load change (e.g., add or remove), if any, to cause the desired operational line shift. The influence of the E-Motor 34 on the operational line of the compressor 23 may be determined in a variety of different ways. For example, examples of techniques that may be used to determine the influence of the E-Motor load may be determined include, but are not limited to, using a phase shift system, an oil pressure balance system, current and tension power measurement (based on assumed/deduced efficiency), a measure of compressor bleed air (e.g., P3 air), or the like, and any combination thereof. Some of these techniques may be implemented in algorithmic form.

The magnitude of the E-Motor 34 load on the compressor 23 may be determined in a number of different ways. For example, the E-Motor 34 load may be determined using a sensor input providing data relating to the current amount of torque produced by the E-Motor 34, or the current rotational speed of the E-Motor 34, or the current electrical current drawn by the E-Motor 34, or the current electrical voltage across the E-Motor 34, or the like, or any combination thereof. In addition, other E-Motor 34 operational parameters such as, but not limited to, the efficiency of the E-Motor 34 may also be used in the determination of the E-Motor 34 load value on the compressor 23.

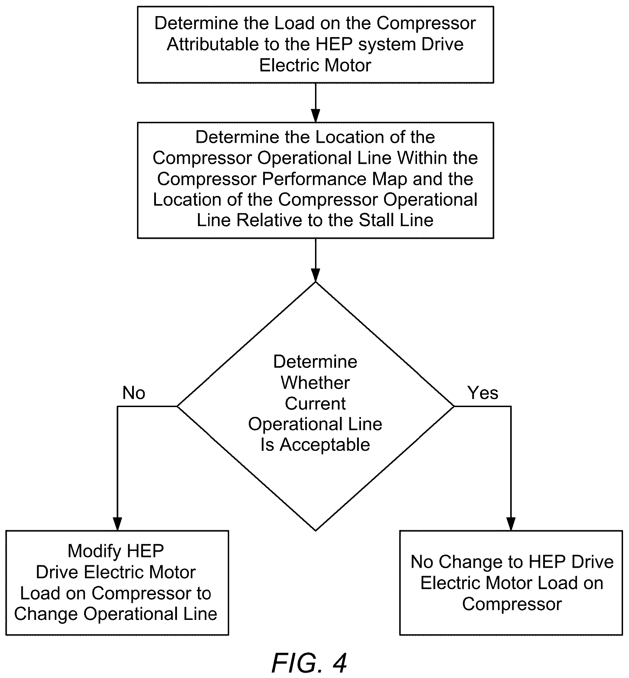

Referring to FIG. 4, the present disclosure includes the ability to selectively modify (e.g., add or remove) E-Motor 34 load on the compressor 23 to shift the existing compressor operational line position to a desired compressor operational line position. For example, in the event it is desirable to shift the existing compressor operating line away from the stall line within the compressor performance map, the system may act to increase the amount of E-Motor 34 load applied to the compressor 23. Adding load to the compressor 23 will cause the compressor operating line to shift away from the stall line, thereby increasing the stall margin remaining value and the maximum acceleration capability of the engine 22.

Embodiments of the present disclosure may be configured to determine whether the current operational line of the compressor 23 is acceptable or not acceptable. An acceptable operational line may be one that is associated with an acceptable stall margin value, or that is associated within a range of acceptable stall margin values, or similar threshold. If the current operational line of the compressor 23 is acceptable, then the present methodology may be configured (e.g., via stored instructions) to not change the E-Motor 34 load on the compressor 23; i.e., a null load change. If the operational line of the compressor 23 is not acceptable, then the present methodology may be configured (e.g., via stored instructions) to determine a change to the E-Motor 34 load on the compressor 23. Depending upon desired change to the operational line, the change in the E-Motor 34 load may be increased or decreased. The present disclosure system 20 may then control the E-Motor 34 to increase or decrease the E-Motor 34 load on the compressor 23. The amount that the E-Motor 34 load on the compressor 23 is changed (i.e., increased or decreased) is selected to result in the desired change in the compressor operational line; i.e., shift the compressor operational line to an acceptable position within the compressor performance map.

Gas turbine compressors have a maximum acceleration capability, above which stall/surge events can occur. The maximum acceleration capability can be defined in terms of a maximum parameter, such as maximum pressure ratio across the compressor 23 (i.e., P_{OUT} / P_{IN}), or maximum acceleration, on a given compressor rotational speed line.

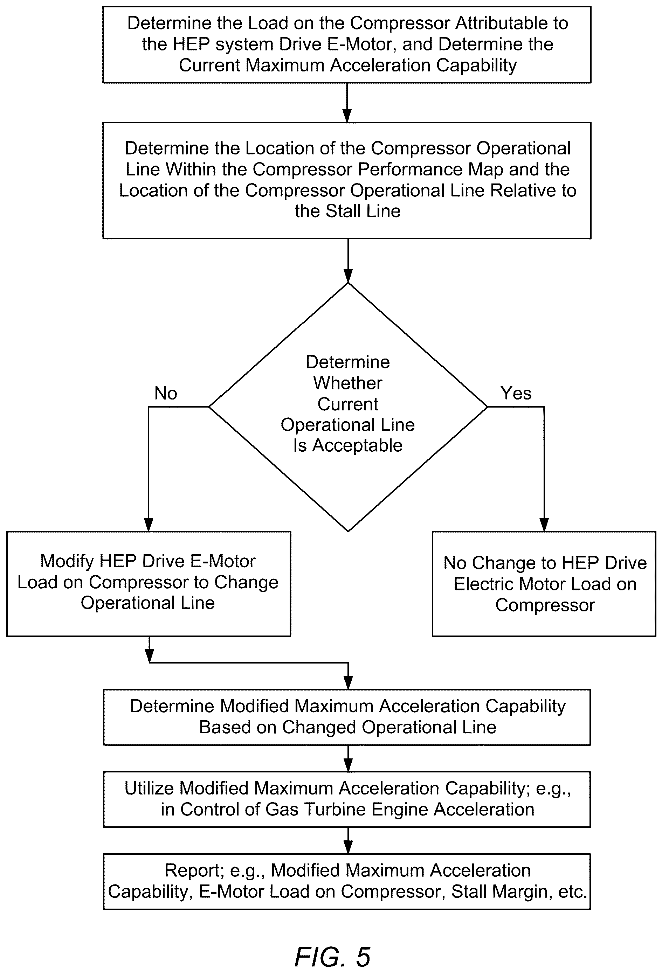

Referring to FIG. 5, in some embodiments the present disclosure HEP system control system and methodology may be configured for control in terms of maximum acceleration capability. As indicated herein, the maximum acceleration capability is related to the relative positions of the compressor operating line and the stall line; i.e., the stall margin. In some present disclosure embodiments, the system 20 may configured to determine and report (e.g., to the HEP system operator) the current maximum acceleration capability as well as the maximum acceleration capability available by adding or removing E-Motor 34 load to the compressor 23. The system 20 may be further configured to allow the operator to manually modify the E-Motor 34 load applied to the compressor 23, or the system 20 may be configured to automatically modify the E-Motor 34 load applied to the compressor 23 to alter the maximum acceleration capability of the HEP system 20. In those embodiments wherein the system 20 is configured to allow the operator to manually modify the E-Motor 34 load applied to the compressor 23, the system 20 may include a cockpit display of the relevant data to facilitate pilot operation. Maximum acceleration capability may be defined / displayed in terms of a maximum acceleration value, or a maximum compressor ratio value, or the like. In some embodiments, the maximum acceleration capability may be used to control (e.g., limit) the actual acceleration of the gas turbine engine 22, and thereby mitigate the potential for compressor stall associated with fuel control.

As indicated herein, in some present disclosure embodiments, an electric starter motor 41 and/or the second electric motor 36 may be controlled in a manner like that described herein with respect to the E-Motor 34 to selectively impart (e.g., add, remove, or maintain existing) load on the compressor 23 of the gas turbine engine 22 for compressor control. In some conventional gas turbine engine applications (i.e., non-HEP), embodiments of the present disclosure may utilize the electric starter motor 41 alone, or the second electric motor 36 alone, or a combination of the second electric motor and the electric starter motor 41 for compressor control purposes. The E-Motor 34 of a HEP system is typically significantly larger than an electric starter motor 41 or a second electric motor 36. Consequently, within the present disclosure methodology the E-Motor 34 of a HEP system 20 is understood to provide significantly more operational capability than may be available using a starter motor 41 alone, or a second electric motor 36 alone, or some combination of the starter motor 41 and the second electric motor 26.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted is a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.
The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A method of controlling a compressor operating line in a propulsion system (20) for an aircraft, the system including a gas turbine engine (22), an electric motor (34; 36; 41), a gearbox (28), and a propulsor (26), wherein the gas turbine engine (22) has a compressor (23), a combustor (25), a turbine (27), and an engine shaft (29) extending between the compressor (23) and the turbine (27), and wherein the gas turbine engine (22) is in drive engagement with the gearbox (28), and the propulsor (26) is driven by the gearbox (28), the method including:
controlling the gas turbine engine (22) to provide motive force to the propulsor (26);
determining an operational line of the compressor (23); and
controlling the operational line of the compressor (23) by controlling the electric motor (34; 36; 41) to change an amount of load on the compressor (23) attributable to the electric motor (34; 36; 41).

2. The method of claim 1, wherein the electric motor (34) is in drive engagement with the gearbox (28).

3. The method of claim 2, further comprising determining an existing said amount of load on the compressor (23) attributable to the electric motor (34) prior to the step of controlling the operational line of the compressor (23).

4. The method of claim 3, further comprising determining whether the compressor (23) is operating in a stable operation region based on the operational line.

5. The method of claim 4, further comprising determining a stall margin of the compressor (23) based on a position of the operational line.

6. The method of claim 5, wherein the position of the operational line shifts from a first operational line position to a second operational line as a result of the change in the amount of load on the compressor (23) attributable to the electric motor (34).

7. The method of claim 6, wherein performing the step of controlling the operational line of the compressor (23) by controlling the electric motor (34) to change the amount of load on the compressor (23) increases the stall margin.

8. The method of claim 7, wherein the step of controlling the operational line of the compressor (23) by controlling the electric motor (34) to change the amount of load on the compressor (23) includes adding an additional amount of load attributable to the electric motor (34) to the amount of load on the compressor (23).

9. The method of any of claims 6 to 8, wherein performing the step of controlling the operational line of the compressor (23) by controlling the electric motor (34) to change the amount of load on the compressor (23) includes removing a portion of the amount of load attributable to the electric motor (34) on the compressor (23).

10. The method of claim 1, wherein the electric motor (41) is a starter motor (41) for the gas turbine engine (22).

11. A propulsion system (20) for an aircraft, comprising:
a gas turbine engine (22) having a compressor (23), a combustor (25), a turbine (27), and an engine shaft (29) extending between the compressor (23) and the turbine (27);
an electric motor (34; 36; 41);
a gearbox (28);
a propulsor (26);
wherein the gas turbine engine (22) is in drive engagement with the gearbox (28), and the propulsor (26) is driven by the gearbox (28); and
a system controller (32) in communication with the gas turbine engine (22), the electric motor (34; 36; 41), and a non-transitory memory storing instructions, which instructions when executed cause the system controller (32) to:
control the gas turbine engine (22) to provide motive force to the propulsor (26);
determine an operational line of the compressor (23); and
control the operational line of the compressor (23) by controlling the electric motor (34; 36; 41) to change an amount of load on the compressor (23) attributable to the electric motor (34; 36; 41).

12. The propulsion system of claim 11, wherein the electric motor (34) is in drive engagement with the gearbox (28); and
wherein the instructions when executed cause the system controller (32) to determine whether the compressor (23) is operating in a stable operation region based on a position of the operational line, and determine a stall margin of the compressor (23) based on the position of the operational line.
